# EUROPEAN PATENT APPLICATION

(11) **EP 1 577 142 A2**
(43) Date of publication of application: **21.09.2005**
(21) Application number: 05075491.0
(22) Date of filing: 28.02.2005
(51) Int. Cl.: B60K 11/00, B60K 11/04

(54) **Device for transmission of the movement to cooling fans of engines, equipped with means for stopping the fan in its idle condition**

(30) Priority: 16.03.2004 IT mi20040487
(71) Applicant: Baruffaldi S.p.A., Milan (IT)
(72) Inventor: Boffelli, Piercarlo, Milano (IT); Bellotti, Claudio, Cerro al Lambro (MI) (IT); Depoli, Erminio, Crema (CR) (IT)
(74) Representative: Raimondi, Margherita

(57) **Abstract**

Device for transmission of the movement to a fan (1) for cooling the coolant in a motor vehicle, comprising means (21;141;31a) for supporting the fan (1) on which the fan (1) is mounted by means of an idle support (1a), means (3) for generating the movement, a first electromagnetic clutch (30), engagement of which produces rotation of the fan (1) at a number of revolutions equal to that of the movement generating means (3); also comprising means (50;150;250;350;450) for stopping rotation of the fan (1) in its idle condition.

## Description

The present invention relates to a device for transmission of the movement to a fan for cooling the coolant in a motor vehicle, comprising at least one first electromagnetic clutch and means for stopping rotation of the fan in its idle condition.

It is known in the technical sector relating to the cooling of cooling liquids contained in the radiators of motor vehicles that there is a need to force air onto the said radiator in order to obtain a more rapid dissipation of heat from the liquid to the exterior, said forced air flow being obtained by causing rotation of a fan, normally mounted either directly on the driving shaft or on the water pump shaft or on a fixed driven shaft carrying a pulley which receives movement from a belt operated by the driving shaft.

It is also known that said fan must be made to rotate only upon reaching a certain predefined temperature of the water which is detected by means of a thermostat which actuates an electromagnetic clutch, closing of which causes the rotational start-up of the fan. For this purpose it is required that said fan must be able to rotate:
- at a speed slower than that of the transmission shaft for cooling in conditions where there is a low external temperature;
- at a speed which is equal to or even greater than that of the transmission shaft at higher external temperatures or during use in demanding conditions which result in overheating of the engine;
- at zero speed, namely with the fan which does not rotate at all and remains stopped in the idle condition relative to the transmission shaft in the case of particularly low temperatures at which further cooling is unnecessary or even harmful.

In an attempt to obtain these performance results, coupling systems of the mixed type with electromagnetically operated friction clutches and drive couplings based on the use of parasitic currents generated by rotation of a conductive element in the vicinity of permanent magnets have been designed.

Although fulfilling their function, these solutions have the drawback, however, arising from the fact that at colder temperatures the fan is always rotating even in the idle condition, owing to disengagement of the electromagnetic clutch and/or the auxiliary movement transmission means, producing precisely that undesired cooling effect even during start-up of the engine, when it is in fact required that the latter should heat up as rapidly as possible.

The technical problem which is posed, therefore, is that of providing a device for transmission of the rotational movement to a fan for cooling the coolant in motor vehicles, which is actuated by a single actuating means and allows rotation of the fan at a number of revolutions which can be controlled and adjusted depending on the actual cooling requirement of the engine, which also includes the possibility of keeping the fan stopped in its idle condition and at very low external temperatures.

Within the scope of this problem a further requirement is that the device should have compact dimensions and should not have large and costly projecting rotational masses and be able to be controlled by means of direct sensing of the temperature of the coolant.

These results are obtained according to the present invention by a device for transmission of the movement to a fan for cooling the coolant in a motor vehicle, comprising means for supporting the fan on which the fan is mounted by means of an idle support; means for generating the movement; a first electromagnetic clutch, engagement of which causes rotation of the fan at a number of revolutions equal to that of the movement generating means; and also comprising means for stopping rotation of the fan in its idle condition. Further details may be obtained from the following description of a non-limiting example of embodiment of the subject of the invention provided with reference to the accompanying drawings in which:
- Figures 1a,1b show a schematic axial cross-section through a first embodiment of the device according to the invention for fans with two speeds and fixed support shaft in the condition where the fan is rotating and stopped, respectively;
- Figure 2 shows a schematic axial cross-section through a second embodiment of the device according to the invention for fans with two speeds and fixed support shaft;
- Figure 3 is a schematic cross-section along a plane indicated by III-III in Fig. 4 of a third example of embodiment of the device for fans mounted on a rotating shaft;
- Figure 4 is a schematic cross-section along a plane indicated by IV-IV in Fig. 3;
- Figures 5a,5b are schematic axial cross-sections through the clutch device 3 in the condition where the fan is rotating and stopped, respectively;
- Figure 6 is a schematic cross-section along a plane VI-VI in Fig. 7 of a fourth example of embodiment of the device for fans mounted on a rotating shaft;
- Figure 7 is a schematic cross-section along a plane indicated by VII-VII in Fig. 6;
- Figures 8, 9 are schematic axial cross-section through a fifth example of embodiment of the device according to the invention for fans with two speeds, rotating support shaft and stopping means which can be controlled.

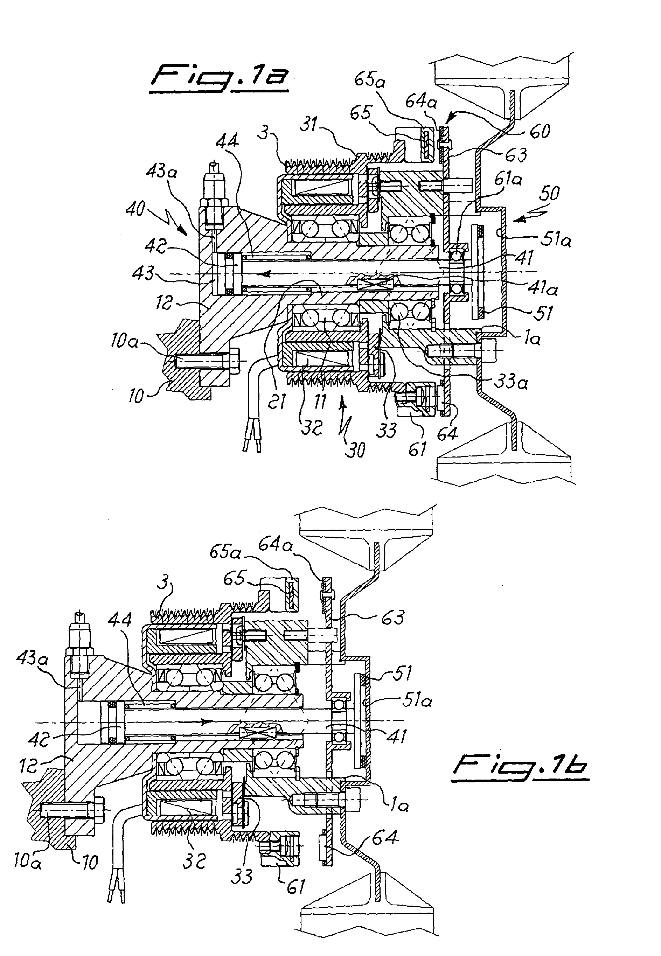

As shown in Figs. 1a,1b, the device for transmission of the movement to a fan 1 for cooling motor vehicle, mounted on a support 1a, is arranged between the said fan 1 and a rotor 31 integral with a pulley 3 connected to the driving shaft by means of a belt (not shown).

In greater detail the fixed support consists of a hollow tube 21, one end of which is in the form of a support flange 12 joined to the base 10 of the engine by means of fixing means 10a; the hollow tube 21 has, keyed thereon, a bearing 11 on which the rotor 31 integral with the pulley 3 is mounted.

Said rotor 31 forms the rotating element of an electromagnetic clutch 30 formed by a fixed annular electromagnet 32 concentric with the rotor, arranged between the latter and the fixed flange 12 and electrically connected to a thermostat (not shown) for example for the temperature of the cooling water.

On the opposite side to the electromagnet 32, relative to the rotor 31, the armature 33 of the clutch 30 is arranged and connected to a support 1a of the fan 1, being mounted on a bearing 11 in turn keyed onto the hollow tube 21. The hollow tube 21 has, coaxially arranged inside it, the rod 41 of a device 40 for actuating in the longitudinal direction a second clutch 60, the rotor 61 of which is integral with the rotor 31 of the first clutch 30 mounted and the armature of which consists of a disk 63 mounted on the outer race of a bearing 63a keyed onto the said rod 41. Said armature 63 is movable in an axially displaceable manner with respect to the fan 1, but is rotationally locked therewith.

Said second clutch is of the induction type based on parasitic or Foucault currents and comprises a plurality of permanent magnets 64 mounted on a containment ring 64a made of non-magnetic material and integral with the armature 63 and a first ring 65 made of conductive material and mounted on a second ring 65a integral with the rotor 61.

In this way, the rotor 61 and the magnets 64 form the induction linkage elements able to rotationally drive the armature 63 and therefore the fan 1.

The said device 40 for engaging/disengaging the second clutch 60 consists of said rod 41, one end of which is integrally joined to a piston 42 sliding inside a cylinder 43 to which the actuating fluid is supplied via an associated duct 43a, said actuating fluid causing the advancing movement, in a longitudinal direction and towards the outside, of the rod 41 against the thrusting action of a spring 44 which tends to cause the rod 41 to return into the retracted position.

Said cylinder may conveniently be of the pneumatic/hydraulic/oil-dynamic type or of the electromechanical type.

Said rod is prevented from rotating by means of a radial stop element 41a integral with the tube 21. The means 50 for stopping the fan 1 are mounted on the free end of the rod 41, opposite to that of the piston 42.

In greater detail, said stopping means 50 consist of a ring 51 of friction material which, following engaging/disengaging displacement of the rod 41, is situated at a distance from or comes into contact with a corresponding reaction surface 51a of the support 1a of the fan.

The operating principle of the coupling system is as follows:
- the cylinder 43 is kept normally discharged so that the thrusting action of the spring 44 recalls, towards the inside, the rod 41 which draws with it in the axial direction the stopping means 50, causing the separation of the friction ring 50 from the reaction surface 51a;
- if the electromagnet 32 is kept deactivated, the rotation of the rotor 61 of the second clutch causes the formation of parasitic currents, between the elements 64 and 65 of the clutch 60, which rotationally drive the support 1a and therefore the fan 1; since driving of the support 1a by the rotor 61 takes place with relative slipping, the fan will rotate at a speed slower than that of the rotor 31;
- if it is required to stop rotation of the fan 1, the cylinder 43 is pressurised so as to overcome the resistance of the spring 44 and bring the rod 41 into the extracted position where the friction ring 51 is coupled with the corresponding reaction surface 51a; since the ring is rotationally locked the said relative contact will cause complete stoppage of the fan 1.

It can therefore be seen how the transmission device according to the invention is able to achieve the three required speeds of rotation of the fan (number of revolutions equal to/less than/zero compared to that of the movement generating shaft) without high projecting rotating loads on the fixed support and with control determined by direct sensing of the water temperature; in addition to this, the presence of the stopping means 50 ensures that the fan may be rotationally stopped in any external temperature conditions, until there is a contrary command for activation of rotation.

Fig. 2 shows a second embodiment of the device according to the present invention, in which the stopping means 150 consist of an electromagnet 151 integral with the rod 141 which is in this case axially locked and integral with the fixed part 10 of the engine. In this configuration the support 1a of the fan 1 has internally an armature 153 constrained to the bell member by resilient means able to allow displacement of the said armature, but prevent its rotation relative to the support 1a.

In this way, activation of the electromagnet 151, which is fixed, via the associated power supply cables 151a, causes attraction of the armature 153 which is rotationally locked, causing stoppage of the support 1a and therefore the fan 1.

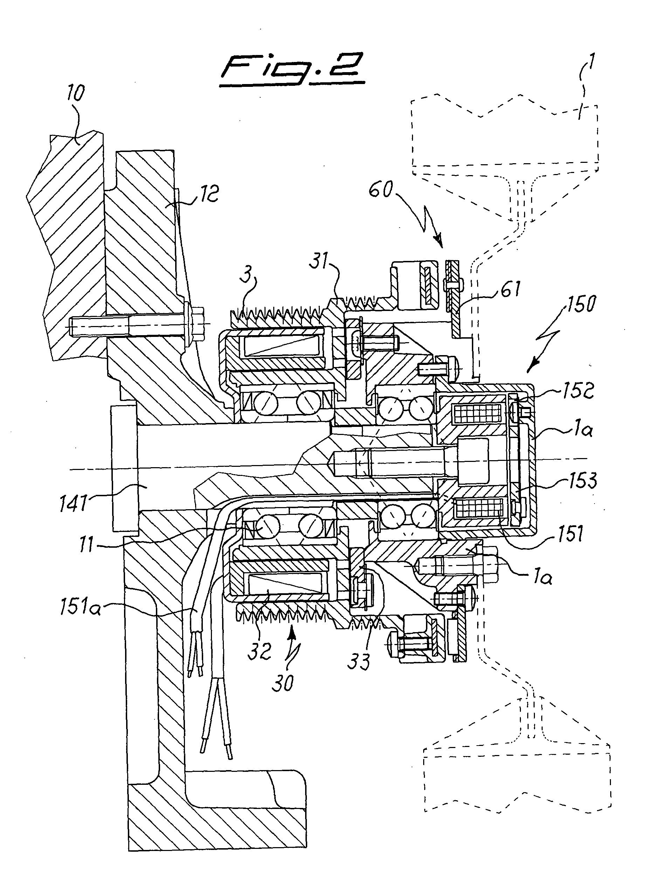

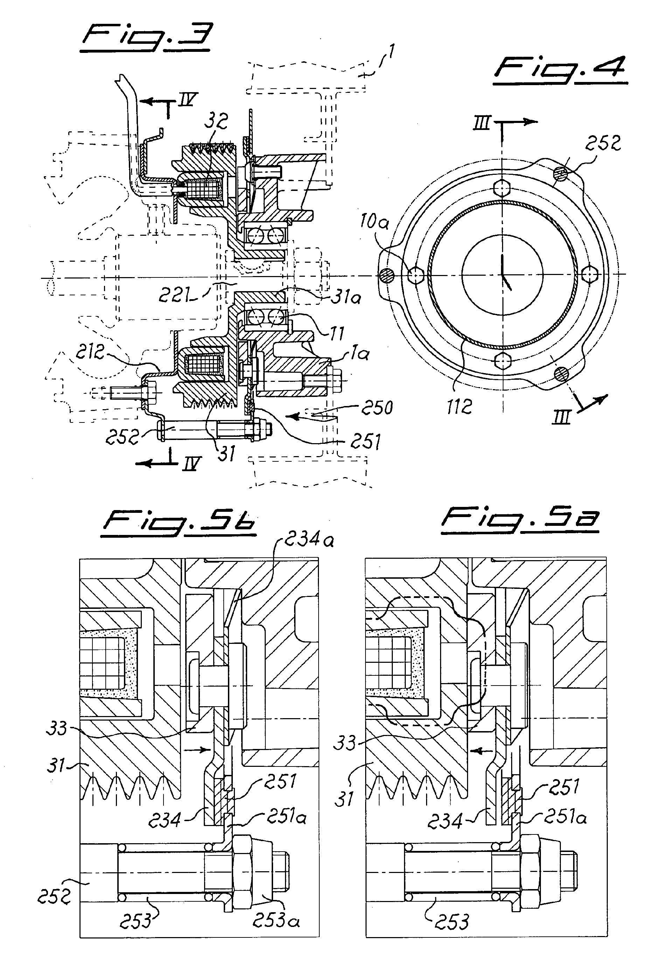

Figures 3 to 5b show a third example of embodiment of the device according to the present invention, which may be implemented for fans 1 mounted (directly or indirectly) on a rotating shaft 221 such as, for example, that of the water pump instead of on a fixed shaft 21 as described above.

In this configuration the fixed electromagnet 32 of the first clutch 30 is constrained by means of a bracket 212 to the fixed part 10 of the engine and the rotor 31 is mounted on the shaft 221 by means of a tube 31a integral with the said rotor.

Between the armature 33 of the clutch 30 and the support 1a of the fan 1 there is arranged a ring 234 constrained to a resilient element 234a able to allow displacement of the ring 234, but not its rotation relative to the support 1a.

The fixed flange 212 also has, integral therewith, columns 252 extending in the longitudinal direction and having mounted, on their free end, a ring 251a with, arranged thereon, a disk 251 made of friction material and situated between the ring 234 of the armature 33 and the support 1a of the fan.

According to a preferred embodiment, a spring 253 is situated between the fixed flange 112 and the disk 251, the force of said spring being able to be adjusted by screw/female thread means 253a integral with the column 252.

It is envisaged, moreover, that said columns may be three in number so as to form a balanced reaction surface for the disk 251.

The operating principle is as follows:
- in normal operating conditions the electromagnet 32 is activated and attracts the armature 33 against the retaining action of the resilient element 234a; the armature 33, adhering to the rotor 31, causes rotation of the fan 1;
- if it is required to switch off the fan 1, the electromagnet 32 is deactivated, thus releasing the armature which is attracted by the resilient means 234a, causing contact between the ring 234 and the friction disk 251 which stops the fan 1 and keeps it at a standstill.

It can be seen how adjustment of the forces of the resilient element 234a recalling the armature 33 and the spring exerting a thrusting action on the ring 253a carrying the friction disk 251 allows adjustment of the braking torque and take-up of any wear affecting the said friction ring.

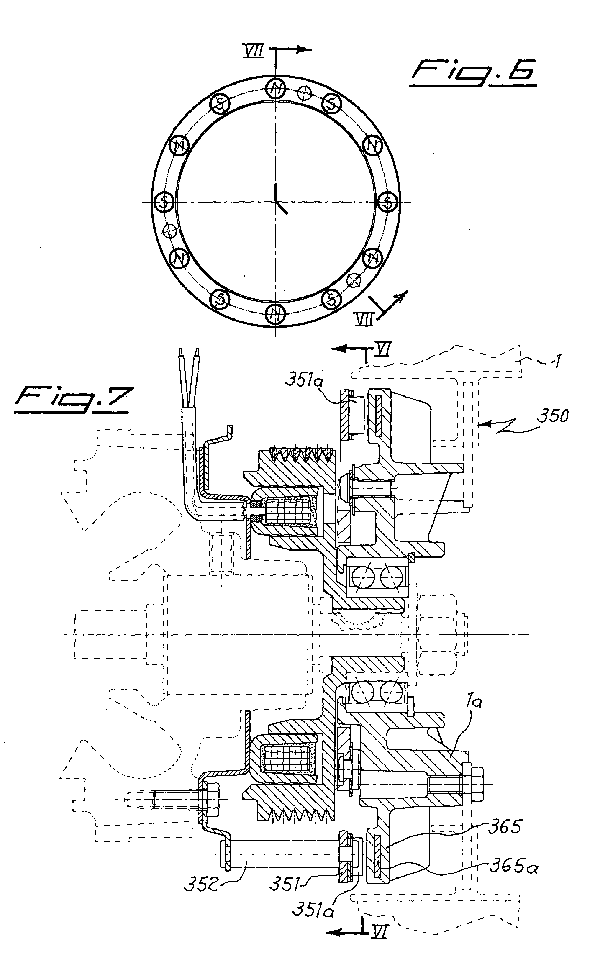

Figs. 6 and 7 show a further variation of embodiment of the device according to the invention; in this case the means 350 for stopping the fan consist of a magnetic/induction hysteresis brake.

In greater detail the brake consists of a first ring 365 of conductive material mounted on a second ring 365a integral with the support 1a of the fan 1; a disk 351 on which permanent magnets 351a are arranged is provided facing said ring 365; said disk is integral with columns 352 fixed to the flange 112 constrained to the engine.

When the electromagnet 30 is deactivated, the rotation of the ring 365 with respect to the disk 351 causes the linkage of a magnetic flux which produces a corresponding driving torque.

By suitably arranging the permanent magnets 351a with a correct N/S orientation, a resistance torque which opposes the thrusting torque caused by the rotor 31 is obtained and by suitably adjusting the size of the magnetic flux, stoppage of the fan 1 occurs.

It is envisaged moreover that in this configuration the brake may be of the magnetic hysteresis type or magnetic induction type and in this latter case either synchronous or asynchronous.

It is envisaged, moreover, that the brake may be provided radially, instead of frontally; in this case the magnets will be arranged overlapping on top of the element 365,365a of inductive material arranged on the external diameter of the support 1a of the fan 1.

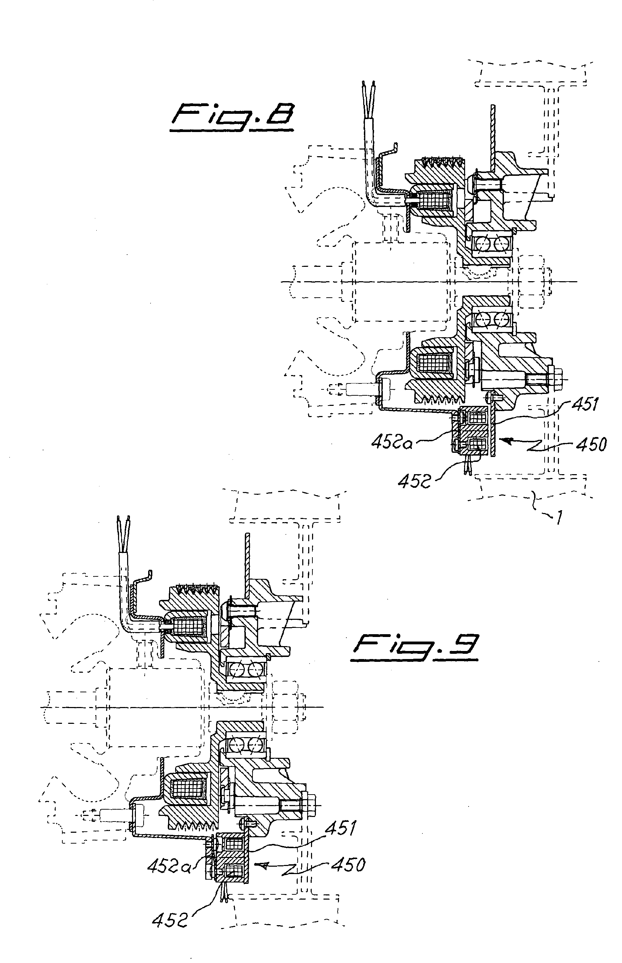

Figs. 8 and 9 show a fifth example of embodiment of the device 450 for stopping the fan which in this case is also mounted on a rotating shaft.

In this configuration the stopping means consist of an electromagnetic clutch 450 comprising an electromagnet 452 integrally joined to the flange 112 by means of a resilient element 452a which allows displacement thereof in the longitudinal direction, preventing however rotation thereof, and a ring 451 of friction material integral with the support 1a of the fan 1.

In low temperature conditions the electromagnetic clutch 30 is deactivated and the electromagnet 452 is activated, causing its displacement towards the disk 451 against the recall action of the resilient element 451a; following displacement, the electromagnet is constrained to the disk 451, causing stoppage and locking thereof and hence of the fan 1.

The means for stopping the fan 1 may in this case be controlled by associated means which are connected, for example, to temperature detection sensors and by means of which it is therefore possible to program different operating conditions.

In this case, also, the electromagnet 452 may be arranged radially with respect to the ring 451 positioned on the external diameter of the support 1a of the fan 1.

## Claims

1. Device for transmission of the movement to a fan (1) for cooling the coolant in a motor vehicle, comprising:
- means (21;141;31A) for supporting the fan (1) on which the fan (1) is mounted by means of an idle support (1a) ;
- means (3) for generating the movement;
- at least one first electromagnetic clutch (30), engagement of which produces rotation of the fan (1) at a number of revolutions equal to that of the movement generating means (3);
**characterized in that** it comprises:
- means (50;150;250;350;450) for stopping rotation of the fan (1) in its idle condition.

2. Device according to Claim 1, **characterized in that** said first clutch (30) comprises a fixed electromagnet (32) coaxially mounted inside a rotor (31) integral with said movement generating means (3), a bearing (11) which is keyed onto the supporting means (21;141) and which has, mounted thereon, the said rotor (31), and an armature (33) rotationally locked to the support (1a) of the fan (1) by resilient means (33a) able to allow displacement thereof with respect to the said support.

3. Device according to Claim 1, **characterized in that** it comprises a second clutch (60), the engagement/disengagement of which causes a rotation of the fan at a number of revolutions less than or zero compared to that of the movement generating means.

4. Device according to Claim 3, **characterized in that** said second clutch (60) is of the induction type based on the parasitic or Foucault currents.

5. Device according to Claim 3, **characterized in that** said second clutch (60) is of the magnetic hysteresis type.

6. Device according to Claim 1, **characterized in that** said means (21;141) supporting the fan (1) are fixed.

7. Device according to Claim 1, **characterized in that** said means (31a) supporting the fan (1) are movable rotationally.

8. Device according to Claim 6, **characterized in that** said means (141) supporting the fan (1) are formed by a rod (141) axially locked and integral with the fixed part (10) of the engine.

9. Device according to Claim 8, **characterized in that** said means (150) for stopping the fan (1) consist of an electromagnet (151) integral with the fixed rod (141) supporting the fan (1).

10. Device according to Claim 9, **characterized in that** the support (1a) of the fan (1) has internally an armature (153) constrained to the said support by resilient means (153a) able to allow a displacement of the said armature against the electromagnet (151) and vice versa, but prevent rotation thereof with respect to the support (1a) of the fan (1).

11. Device according to Claim 6, **characterized in that** said means (21) for supporting the support (1a) of the fan (1) consist of a hollow tube (21), one end of which is in the form of a flange (12) integral with the base (10) of the engine.

12. Device according to Claim 11, **characterized in that** the hollow tube (21) has, coaxially arranged inside it, the rod (41) of a device (40) for actuating in the longitudinal direction a second clutch (60), the rotor (61) of which is integral with the rotor (31) of the first clutch (30) and the armature of which consists of a disk (63) mounted on the outer race of a bearing (63a) keyed onto the said rod (41), said armature (63) being displaceable axially with respect to the fan (1), but rotationally locked therewith.

13. Device according to Claim 12, **characterized in that** one end of the actuating rod (41) is integrally joined to a piston (42) sliding inside a cylinder (43) to/from which the actuating fluid is supplied/discharged via an associated duct (43a), said actuating fluid causing the advancing movement, in the longitudinal direction towards the outside, of the rod (41) against the thrusting action of a spring (44) or the return movement of the rod pushed by the said spring (44).

14. Device according to Claim 13, **characterized in that** said rod (41) is prevented from rotating by means of a radial stop element (41a) integral with the tube (21).

15. Device according to Claim 12, **characterized in that** said stopping means (50) consist of a ring (51) of friction material which, following engaging/disengaging displacement of the rod (41), comes into contact with or is situated at a distance from a corresponding reaction surface (51a) of the support (1a) of the fan (1).

16. Device according to Claim 7, **characterized in that** said means (31) for supporting the fan are integral with a rotating shaft (221).

17. Device according to Claim 16, **characterized in that** between the armature (33) of the clutch (30) and the support (1a) of the fan (1) there is arranged a ring (234) constrained to a resilient element (234a) able to allow the displacement of the ring (234), but not its rotation relative to the said support (1a).

18. Device according to Claim 17, **characterized in that** it comprises columns (252) extending in the longitudinal direction and integral with the fixed part (212) of the engine, on the free end of each column there being mounted a ring (251a) which is coaxial with the support (241) of the fan and on which a disk (251) of friction material, situated between the ring (234) of the armature (33) and the support (1a) of the fan, is arranged.

19. Device according to Claim 18, **characterized in that** a spring (253) is situated between the fixed flange (212) and the disk (251), the axial thrusting force of said spring being able to be adjusted by screw/female thread means (253a) integral with the column (252).

20. Device according to Claim 7, **characterized in that** the means (350) for stopping the fan (1) consist of a magnetic hysteresis/induction brake.

21. Device according to Claim 20, **characterized in that** said brake comprises a first ring (365) made of conductive material and mounted on a second ring (365a) integral with the support (1a) of the fan (1), and a disk (351) which is facing said ring (365a) and on which permanent magnets (351a) are arranged, said magnet-carrying disk being integral with fixed columns (352).

22. Device according to Claim 21, **characterized in that** the brake is radial.

23. Device according to Claim 21, **characterized in that** the brake is of the magnetic hysteresis type.

24. Device according to Claim 21, **characterized in that** the brake is of the magnetic induction type.

25. Device according to Claim 23, **characterized in that** the brake is synchronous.

26. Device according to Claim 23, **characterized in that** the brake is asynchronous.

27. Device according to Claim 7, **characterized in that** said stopping means (450) comprise an electromagnetic clutch (450) comprising an electromagnet (452) integral with a fixed flange (112) via a resilient element (452a) which allows displacement thereof in the longitudinal direction, preventing its rotation, and a ring (451) of friction material which is integral with the support (1a) of the fan (1) and against which the electromagnet engages in the excited condition.

28. Device according to Claim 27, **characterized in that** said electromagnet (452) is activated by control means connected to temperature sensing devices.

29. Device according to Claim 26, **characterized in that** said electromagnet (452) acts radially.
